# EUROPEAN PATENT APPLICATION

(11) **EP 4 455 881 A1**
(43) Date of publication of application: **30.10.2024**
(21) Application number: 21968708.4
(22) Date of filing: 24.12.2021
(51) Int. Cl.: G06F 9/54

(54) **ARTIFICIAL INTELLIGENCE (AI) SERVICE PROVIDING METHOD AND DEVICE**

(71) Applicant: Beijing Xiaomi Mobile Software Co., Ltd., Beijing 100085 (CN)
(72) Inventor: CHEN, Dong, Beijing 100085 (CN); SUN, Yuze, Beijing 100085 (CN)
(74) Representative: Gunzelmann, Rainer
(86) International application number: PCT/CN2021/141364
(87) International publication number: WO 2023/115579

(57) **Abstract**

Disclosed in embodiments of the present disclosure is an artificial intelligence (AI) service providing method and device. The method comprises: an NRF network element obtaining an AI service provided by an AI network element, and generating a candidate AI service list; receiving an AI service query request of a first network element; according to the AI service query request and the candidate AI service list, generating an AI service list corresponding to the first network element; and feeding the AI service list back to the first network element, wherein the first network element selects an AI network element from the AI service list to provide an AI service. Therefore, the AI network element is used as an independent network function (NF), and accesses a core network architecture in parallel, so that the intelligence and adaptability of a network are improved.

## Description

### TECHNICAL FIELD

The disclosure relates to a field of communication technology, in particular to artificial intelligence (AI) service providing methods and AI service providing apparatuses.

### BACKGROUND

Artificial intelligence (AI) has played a huge role in various industries. AI provides functions such as data analysis, data prediction, and image recognition, and can be used to solve problems such as load balancing and network design in communication networks.

### SUMMARY

Embodiments of the disclosure provide artificial intelligence (AI) service providing methods and AI service providing apparatuses, which may connect an AI network element in parallel to a core network architecture as an independent network function (NF) to improve intelligence and adaptability of the network.

According to a first aspect of embodiments of the disclosure, an AI service providing method, applied to a network repository function (NRF) network element, is provided. The method includes:
obtaining an AI service provided by an AI network element and generating a candidate AI service list;
receiving an AI service query request from a first network element;
generating an AI service list corresponding to the first network element based on the AI service query request and the candidate AI service list; and
feeding back the AI service list to the first network element, in which the first network element selects the AI network element from the AI service list to provide the AI service.

In the technical solution, the NRF network element acquires the AI service provided by the AI network element and generates the candidate AI service list, receives the AI service query request from the first network element, generates the AI service list corresponding to the first network element according to the AI service query request and the candidate AI service list, and feeds back the AI service list to the first network element, so that the first network element selects the AI network element from the AI service list to provide the AI service. In this way, the AI network element is connected to a core network architecture in parallel as an independent NF, so that AI algorithms such as federated learning (FL), reinforcement learning (RL), deep learning (DL), etc. can be used directly by other NFs such as an access and mobility management function (AMF) network element, a policy control function (PCF) network element, a network slice selection function (NSSF) network element, etc., thereby improving intelligence and adaptability of the network.

According to a second aspect of embodiments of the disclosure, an AI service providing method, applied to a first network element, is provided. The method includes:
receiving an AI service request from a terminal device, in which the AI service request includes required AI service information;
sending an AI service query request to an NRF network element;
receiving an AI service list from the NRF network element; and
selecting an AI service that matches the AI service information from the AI service list, determining at least one AI network element corresponding to the AI service, and sending a policy request to the AI network element.

According to a third aspect of embodiments of the disclosure, an AI service providing method, applied to an AI network element, is provided. The method includes:
sending a registration request to an NRF network element, in which the registration request includes at least one AI service provided by the AI network element.

According to a fourth aspect of embodiments of the disclosure, an AI service providing method, applied to a terminal device, is provided. The method includes:
sending an AI service request to a first network element, in which the AI service request includes required AI service information; and
receiving policy information fed back by the first network element, in which the policy information is generated by a corresponding AI service.

According to a fifth aspect of embodiments of the disclosure, an AI service providing apparatus, applied to an NRF network element, is provided. The apparatus includes:
a first processing module, configured to obtain an AI service provided by an AI network element and generate a candidate AI service list;
a receiving module, configured to receive an AI service query request from a first network element;
a second processing module, configured to generate an AI service list corresponding to the first network element based on the AI service query request and the candidate AI service list; and
a sending module, configured to feedback the AI service list to the first network element, in which the first network element selects the AI network element from the AI service list to provide the AI service.

According to a sixth aspect of embodiments of the disclosure, an AI service providing apparatus, applied to a first network element, is provided. The apparatus includes:
a first receiving module, configured to receive an AI service request from a terminal device, in which the AI service request includes required AI service information;
a first sending module, configured to send an AI service query request to an NRF network element;
a second receiving module, configured to receive an AI service list from the NRF network element; and
a third processing module, configured to select an AI service that matches the AI service information from the AI service list, determine at least one AI network element corresponding to the AI service, and send a policy request to the AI network element.

According to a seventh aspect of embodiments of the disclosure, an AI service providing apparatus, applied to an AI network element, is provided. The apparatus includes:
a registration processing module, configured to send a registration request to an NRF network element, in which the registration request includes at least one AI service provided by the AI network element.

According to an eighth aspect of embodiments of the disclosure, an AI service providing apparatus, applied to a terminal device, is provided. The apparatus includes:
a third sending module, configured to send an AI service request to a first network element, in which the AI service request includes required AI service information; and
a fourth receiving module, configured to receive policy information fed back by the first network element, in which the policy information is generated by a corresponding AI service.

According to a ninth aspect of embodiments of the disclosure, a communication apparatus including a processor is provided. When the processor calls program codes stored in a memory, the method of the first aspect, the method of the second aspect, the method of the third aspect, or the method of the fourth aspect is implemented.

According to a tenth aspect of embodiments of the disclosure, a communication apparatus is provided. The communication apparatus includes a processor, and a memory having computer programs stored thereon. When the processor executes the computer programs stored on the memory, the communication apparatus is caused to implement the method of the first aspect, the method of the second aspect, the method of the third aspect, or the method of the fourth aspect.

According to an eleventh aspect of embodiments of the disclosure, a communication apparatus is provided. The communication apparatus includes a processor and an interface circuit. The interface circuit is configured to receive code instructions and transmit them to the processor, and the processor is configured to run the code instructions to cause the communication apparatus to implement the method of the first aspect, the method of the second aspect, the method of the third aspect, or the method of the fourth aspect.

According to a twelfth aspect of embodiments of the disclosure, a communication system is provided. The system includes: the AI service providing apparatus of the fifth aspect, the AI service providing apparatus of the sixth aspect, the AI service providing apparatus of the seventh aspect, and the AI service providing apparatus of the eighth aspect. Or, the communication system includes the communication apparatus of the ninth aspect, the communication apparatus of the tenth aspect, or the communication apparatus of the eleventh aspect.

According to a thirteenth aspect of embodiments of the disclosure, a computer readable storage medium for storing instructions usable by the above terminal device is provided. When the instructions are executed, the terminal device is caused to implement the method of the first aspect, the method of the second aspect, the method of the third aspect, or the method of the fourth aspect.

According to a fourteenth aspect of embodiments of the disclosure, a computer program product including computer programs is provided. When the computer programs are executed by a computer, the computer is caused to implement the method of the first aspect, the method of the second aspect, the method of the third aspect, or the method of the fourth aspect.

According to a fifteenth aspect of embodiments of the disclosure, a chip system is provided. The chip system includes at least one processor and an interface for supporting the terminal device in realizing the functions involved in the fourth aspect, e.g., at least one of determining or processing data or information involved in the method described above. In a possible design, the chip system further includes a memory. The memory is configured to store necessary computer programs and data of the terminal device. The chip system may consist of chips or may include a chip and other discrete devices.

According to a sixteenth aspect of embodiments of the disclosure, a computer program is provided. When the computer program is executed by a computer, the computer is caused to implement the method of the first aspect, the method of the second aspect, the method of the third aspect, or the method of the fourth aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a structural diagram of a communication system provided by an embodiment of the disclosure.
FIG. 2 is a flowchart of an artificial intelligence (AI) service providing method provided by an embodiment of the disclosure.
FIG. 3 is a flowchart of an AI service providing method provided by an embodiment of the disclosure.
FIG. 4 is a flowchart of an AI service providing method provided by an embodiment of the disclosure.
FIG. 5 is a flowchart of an AI service providing method provided by an embodiment of the disclosure.
FIG. 6 is a flowchart of an AI service providing method provided by an embodiment of the disclosure.
FIG. 7 is a flowchart of an AI service providing method provided by an embodiment of the disclosure.
FIG. 8 is a flowchart of an AI service providing method provided by an embodiment of the disclosure.
FIG. 9 is a block diagram of an AI service providing apparatus provided by an embodiment of the disclosure.
FIG. 10 is a block diagram of an AI service providing apparatus provided by an embodiment of the disclosure.
FIG. 11 is a block diagram of an AI service providing apparatus provided by an embodiment of the disclosure.
FIG. 12 is a block diagram of an AI service providing apparatus provided by an embodiment of the disclosure.
FIG. 13 is a block diagram of an AI service providing apparatus provided by an embodiment of the disclosure.
FIG. 14 is a block diagram of an AI service providing apparatus provided by an embodiment of the disclosure.
FIG. 15 is a block diagram of a communication apparatus provided by an embodiment of the disclosure.
FIG. 16 is a block diagram of a chip provided by an embodiment of the disclosure.

### DETAILED DESCRIPTION

In order to better understand artificial intelligence (AI) service providing methods disclosed by embodiments of the disclosure, a communication system to which the embodiments of the disclosure are applicable is first described below.

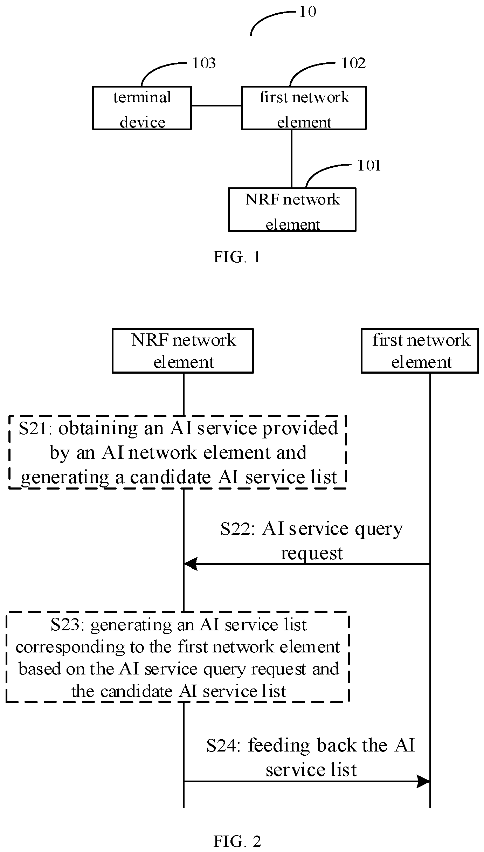

FIG. 1 is a structural diagram of a possible communication system 10 to which the disclosure is applicable.

As illustrated in FIG. 1, the communication system 10 includes: a network repository function (NRF) network element 101, a network element 102 and a terminal device 103, which are described below, respectively.
1. The NRF network element 101 may be, for example, an NRF network element in the 5th generation (5G) communication system. The functions of the NRF network element mainly include registration, deregistration and discovery of network functions and services. The NRF network element may save description information of the deployed network function, including, for example, identification and address of the network function, information about supported services, network slice identification and information about network areas that are being served. In future communications, the network repository function network element may be called an NRF network element, or may be called other names, which are not limited in this disclosure.
2. The first network element 102 may be a user-plane network element in a core network, such as a Terminated User Plane Function (UPF) network element, or may be a control-plane network element in the core network, such as an access and mobility management function (AMF) network element, a session management function (SMF) network element, a policy control function (PCF) network elements, etc.
3. The terminal device (TD) 103 is referred to as a terminal, which is a device with wireless transceiver function and may include various handheld devices, vehicle-mounted devices, wearable devices, computing devices with wireless communication function, or other processing devices connected to a wireless modem, as well as a variety of forms of terminal devices, mobile stations (MSs), terminals, user equipments (UEs), soft terminals, etc. The terminal can be deployed on land, either indoors or outdoors, hand-held or vehicle-mounted, on the water (e.g., on ships), or in the air (e.g., on airplanes, balloons and satellites). The TD can be, for example, a mobile phone, a pad, a computer with wireless transceiver function, a virtual reality (VR) terminal, an augmented reality (AR) terminal, a wireless TD in industrial control, a wireless TD in self-driving, a wireless TD in remote medical surgery, a wireless TD in smart grid, a wireless TD in transportation safety, a wireless TD in smart city, a wireless TD in smart home, etc.

It should be noted that the function devices involved in the embodiments of the disclosure may also be referred to as network elements, functions or function entities. For example, a location management function device may also be referred to as a location management function, a location management function entity, or a location management network element. The names of each of the function devices are not limited in the disclosure. Those skilled in the art may replace the names of the above function devices with other names to perform the same functions, which all fall within the scope of protection of this disclosure.

It is appreciated that the function devices described above may be network elements in a hardware device, software functions running on a dedicated hardware, or virtualized functions instantiated on a platform (e.g., a cloud platform).

It is understood that the communication system described in the embodiments of the disclosure is intended to more clearly illustrate the technical solutions of the embodiments of the disclosure, and does not constitute a limitation on the technical solutions provided by the embodiments of the disclosure. It is understandable by those skilled in the art that as system architectures evolve and new business scenarios emerge, the technical solutions according to the embodiments of the disclosure are also applicable to similar technical problems.

AI service providing methods and AI service providing apparatuses will be introduced in detail below with reference to the accompanying drawings.

FIG. 2 is a flowchart of an AI service providing method provided by an embodiment of the disclosure.

As illustrated in FIG. 2, the method is applied to an NRF network element. The method may include, but is not limited to, the following steps.

At step S21, an AI service provided by an AI network element is obtained and a candidate AI service list is generated.

In embodiments of the disclosure, the AI network element is a network function capable of providing an AI service. The AI network element is embedded in a service based architecture (SBA) as an independent network function (NF), so that other NFs, such as an AMF network element, a policy control function (PCF) network element, a network slice selection function (NSSF) network element, etc., can apply for the AI service provided by the AI network element. In this way, the AI network element can provide intelligent functions for the communication network.

The AI network element provides at least one AI service. For example, the AI service provided by the AI network element may include machine learning (ML), deep learning (DL), transfer learning (TL), federated learning (FL), and the like.

It is noted that the above examples are for illustrative purposes only and are not to be taken as a specific limitation on the embodiments of the disclosure, and the AI network element in the embodiments of the disclosure may provide other AI services other than the above examples.

In embodiments of the disclosure, the AI network element is embedded in an SBA as an independent NF and capable of providing intelligent and predictive data analysis, so that the network side device can intelligently process a large amount of data collected from other devices to analyze and predict the background of the TD and the environmental status of the network, thereby realizing data-driven network-wide operation decisions and providing intelligent network control and optimization. In this way, the network can dynamically learn the network environment and perform intelligent control and resource optimization on the network itself based on user status.

It is understood that in the embodiments of the disclosure, there may be one or more AI network elements, and the AI services of different AI network elements may be the same or may be different, or may be partially the same. Therefore, the NRF network element can store information about at least one AI network element that can provide a plurality of AI services, and generate a candidate AI service list.

At step S22, an AI service query request is received from a first network element.

In the embodiment of the disclosure, the NRF network element receives an AI service query request sent by a first network element. The AI service query request is used to request information about the AI network element that can satisfy the requested AI service.

At step S23, an AI service list corresponding to the first network element is generated based on the AI service query request and the candidate AI service list.

In the embodiment of the disclosure, according to the AI service requested in the AI service query request, the NRF network element can obtain relevant information that satisfies the AI service requested in the AI service query request sent by the first network element according to the stored candidate AI service list, and generate the AI service list corresponding to the first network element based on the relevant information.

In some embodiments, generating the AI service list corresponding to the first network element based on the AI service query request and the candidate AI service list, includes: obtaining a network function and an AI service that the network function should support in the AI service query request; and generating the AI service list by performing filtering and matching on the candidate AI service list based on the network function and the AI service that the network function should support in the AI service query request.

At step S24, the AI service list is fed back to the first network element, so that the first network element selects the AI service provided by the AI network element from the AI service list.

In the embodiment of the disclosure, after generating the AI service list, the NRF network element feeds back the AI service list to the first network element, so that the first network element can select the AI network element from the AI service list to provide the AI service.

In an embodiment, the first network element is, for example, an AMF network element. If the AMF network element wants to use one of the AI services of the AI network element, such as distributed model training, firstly, the AMF network element sends an AI service query request to the NRF network element to inform the NRF of the requested AI service. The NRF network element compares it with the stored AI service list and finds that the FL service can provide distributed model training. In a possible case, there is more than one AI network element that can provide the FL service, and then the NRF network element generates an FL service list and sends the FL service list to the AMF network element, so that the AMF network element can select any AI network element in the FL service list to provide the FL service.

It should be noted that in the above example, there may also be a situation where only one AI network element is able to provide the FL service. In this case, the NRF network element generates an FL service list according to that AI network element and the FL service it provides, and sends the FL service list to the AMF network element, so that the AMF network element may select the AI network element in the FL service list to provide the FL service.

In some embodiments, the AI service query request is received via an HTTP GET message and the AI service list is sent to the first network element via an HTTP RESPONSE message.

In the embodiment of the disclosure, the NRF network element receives the AI service query request sent by the first network element via an HTTP GET message, and sends the AI service list to the first network element via an HTTP RESPONSE message.

By implementing the embodiment of the disclosure, the NRF network element obtains the AI service provided by the AI network element and generates the candidate AI service list, receives the AI service query request from the first network element, generates the AI service list corresponding to the first network element according to the AI service query request and the candidate AI service list, and feeds back the AI service list to the first network element, so that the first network element selects the AI network element from the AI service list to provide the AI service. In this way, the AI network element is connected to the core network architecture in parallel as an independent NF, so that AI algorithms, such as FL, RL, DL, etc., can be used directly by other NFs, such as an AMF network element, a PCF network element, an NSSF network element, etc., thereby improving the intelligence and adaptability of the network.

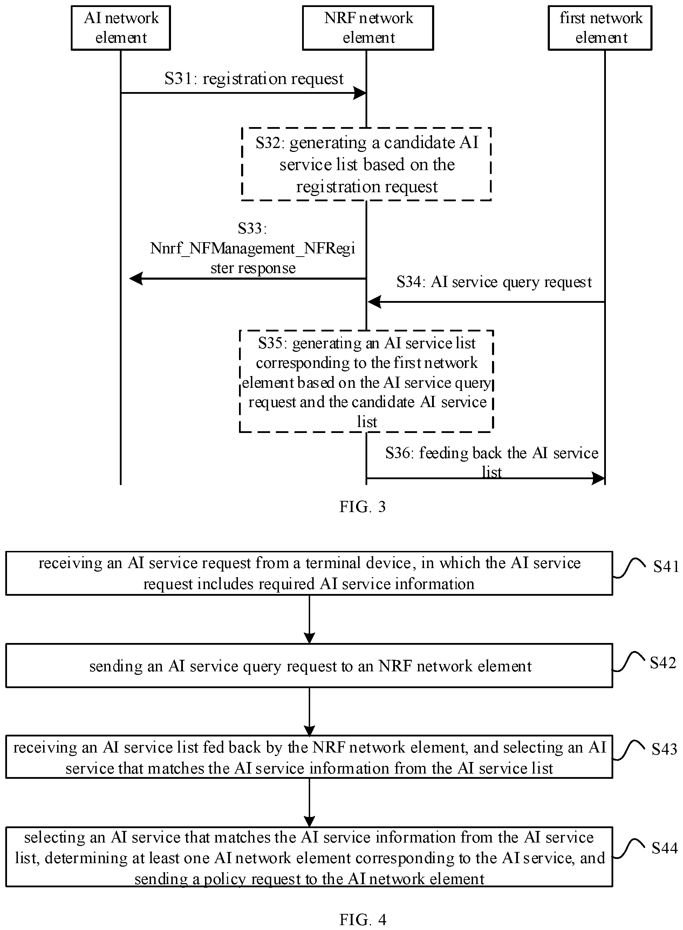

FIG. 3 is a flowchart of an AI service providing method provided by an embodiment of the disclosure.

As illustrated in FIG. 3, the method is applied to an NRF network element. The method may include, but is not limited to, the following steps.

At step S31, a registration request is received from an AI network element, in which the registration request includes at least one AI service provided by the AI network element.

In the embodiment of the disclosure, the NRF network element receives a registration request from the AI network element. The registration request includes at least one AI service provided by the AI network element.

In some embodiments, the registration request includes: an NF type of the AI network element, an instance ID of the AI network element, a public land mobile network (PLMN) ID of the AI network element, a network address of the AI network element, etc.

In some embodiments, the registration request is an Nnrf_NFManagement_NFRegister request.

In the embodiment of the disclosure, the AI network element can call an Nnrf_NFManagement_NFRegister service method of the NRF network element to send the registration request to the NRF network element.

At step S32, a candidate AI service list is generated based on the registration request.

In the embodiment of the disclosure, after receiving the registration request sent by the AI network element, the NRF network element stores relevant information included in the registration request of the AI network element and generates a candidate AI service list according to at least one AI service provided by the AI network element included in the registration request.

In some embodiments, the AI service providing method provided by the embodiment of the disclosure includes the following steps.

At step S33, an Nnrf_ NFManagement_NFRegister response is sent to the AI network element.

In the embodiment of the disclosure, the AI network element sends an Nnrf_NFManagement_NFRegister response to the AI network element after storing the relevant information included in the registration request of the AI network element, to inform the AI network element that the registration is successful.

As illustrated in FIG. 3, in some embodiments, the AI service providing method provided by the embodiment of the disclosure includes the following steps.

At step S34, an AI service query request is received from a first network element.

At step S35, an AI service list corresponding to the first network element is generated based on the AI service query request and a candidate AI service list.

At step S36, the AI service list is sent to the first network element, so that the first network element selects the AI network element from the AI service list to provide the AI service.

In the embodiments of the disclosure, the relevant descriptions of steps S34, S35, and S36 described above can be referred to the relevant descriptions of steps S22, S23, and S24 in the above examples of the disclosure, and will not be repeated herein.

By implementing the embodiments of the disclosure, the NRF network element receives a registration request from an AI network element and generates a candidate AI service list according to the registration request, in which the registration request includes at least one AI service provided by the AI network element. The NRF network element sends an Nnrf_NFManagement_NFRegister response to the AI network element, receives an AI service query request from a first network element and generates an AI service list corresponding to the first network element according to the AI service query request and the candidate AI service list, and feeds back the AI service list to the first network element, so that the first network element selects an AI network element from the AI service list to provide the AI service. In this way, the AI network element is connected to the core network architecture in parallel as an independent NF, so that AI algorithms, such as FL, RL, DL, etc., can be used directly by other NFs, such as an AMF network element, a PCF network element, an NSSF network element, etc., thereby improving the intelligence and adaptability of the network.

FIG. 4 is a flowchart of an AI service providing method provided by an embodiment of the disclosure.

As illustrated in FIG. 4, the method is applied to a first network element. The method may include, but is not limited to, the following steps.

At step S41, an AI service request is received from a TD, in which the AI service request includes required AI service information.

At step S42, an AI service query request is sent to an NRF network element.

At step S43, an AI service list fed back by the NRF network element is received.

At step S44, an AI service that matches the AI service information is selected from the AI service list, at least one AI network element corresponding to the AI service is determined, and a policy request is sent to the AI network element.

In the embodiment of the disclosure, the first network element receives an AI service request from a TD and sends an AI service query request to an NRF network element, in which, the AI service request includes requested AI service information, and the AI service query request is configured to obtain information about the AI network element that satisfies the requested AI service. The NRF network element, according to the AI service requested in the AI service query request, obtains relevant information that satisfies the AI service requested in the AI service query request sent by the first network element according to a stored candidate AI service list. On the basis, an AI service list corresponding to the first network element is generated and fed back to the first network element, so that the first network element can select, according to the fed-back AI service list, an AI service that matches the AI service information from the AI service list.

In some embodiments, the AI service query request is sent to the NRF network element via an HTTP GET message, and the AI service list fed back by the NRF network element is received via an HTTP RESPONSE message.

In the embodiment of the disclosure, the NRF network element receives the AI service query request sent by the first network element via an HTTP GET message, and the NRF network element sends the AI service list to the first network element via an HTTP RESPONSE message.

It should be noted that relevant descriptions of embodiments of the disclosure can be referred to the relevant descriptions of the above embodiments of the disclosure and will not be repeated herein.

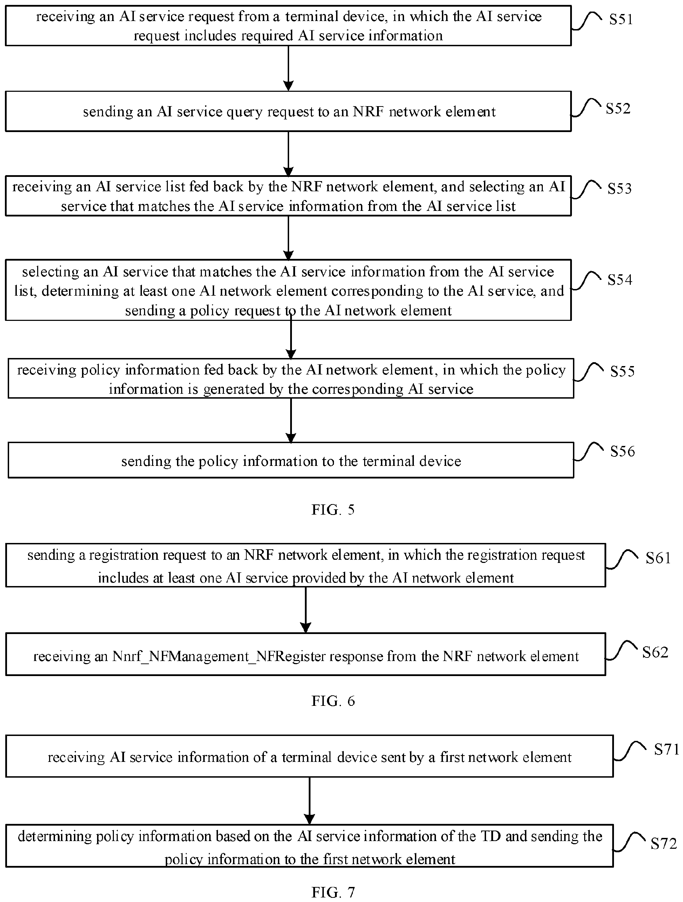

FIG. 5 is a flowchart of an AI service providing method provided by an embodiment of the disclosure.

As illustrated in FIG. 5, the method is applied to a first network element. The method may include, but is not limited to, the following steps.

At step S51, an AI service request is received from a TD, in which the AI service request includes required AI service information.

At step S52, an AI service query request is sent to an NRF network element.

At step S53, an AI service list fed back by the NRF network element is received.

At step S54, an AI service that matches the AI service information is selected from the AI service list, at least one AI network element corresponding to the AI service is determined, and a policy request is sent to the AI network element.

At step S55, policy information fed back by the AI network element is received, in which the policy information is generated by the corresponding AI service.

At step S56, the policy information is sent to the TD.

In the embodiment of the disclosure, the first network element receives the policy information fed back by the AI network element. The policy information is generated by an AI service that matches the AI service information selected from the AI service list.

In some embodiments, the AI service information of the TD is sent to the AI network element via an HTTP POST message, and the policy information fed back by the AI network element is received via an HTTP RESPONSE message.

It should be noted that relevant descriptions of embodiments of the disclosure can be referred to the relevant descriptions of the above embodiments of the disclosure and will not be repeated herein.

FIG. 6 is a flowchart of an AI service providing method provided by an embodiment of the disclosure.

As illustrated in FIG. 6, the method is applied to an AI network element. The method may include, but is not limited to, the following steps.

At step S61, a registration request is sent to an NRF network element, in which the registration request includes at least one AI service provided by the AI network element.

At step S62, an Nnrf_NFManagement_NFRegister response is received from the NRF network element.

In some embodiments, the registration request is an Nnrf_NFManagement_NFRegister request.

It should be noted that relevant descriptions of embodiments of the disclosure can be referred to the relevant descriptions of the above embodiments of the disclosure and will not be repeated herein.

FIG. 7 is a flowchart of an AI service providing method provided by an embodiment of the disclosure.

As illustrated in FIG. 7, the method is applied to an AI network element. The method may include, but is not limited to, the following steps.

At step S71, AI service information of a terminal device sent by a first network element is received.

At step S72, policy information is determined based on the AI service information of the TD and sent to the first network element.

In some embodiments, the AI service information of the TD is received via an HTTP POST message, and the policy information is sent to the first network element via an HTTP RESPONSE message.

It should be noted that relevant descriptions of embodiments of the disclosure can be referred to the relevant descriptions of the above embodiments of the disclosure and will not be repeated herein.

It is noted that steps S71 and S72 in the embodiment of the disclosure may be implemented independently or in combination with any of other steps in the embodiments of the disclosure. For example, steps S71 and S72 can be implemented in combination with steps S61 and S62 in the embodiment of the disclosure, which is not limited herein.

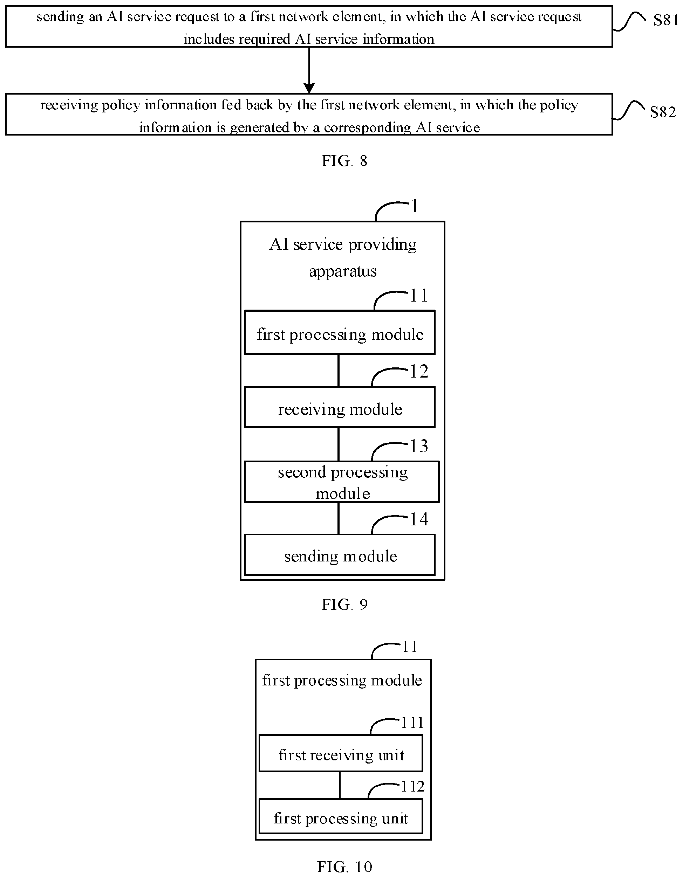

FIG. 8 is a flowchart of an AI service providing method provided by an embodiment of the disclosure.

As illustrated in FIG. 8, the method is applied to a TD. The method may include, but is not limited to, the following steps.

At step S81, an AI service request is sent to a first network element, in which the AI service request includes required AI service information.

At step S82, policy information fed back by the first network element is received, in which the policy information is generated by a corresponding AI service.

It should be noted that relevant descriptions of embodiments of the disclosure can be referred to the relevant descriptions of the above embodiments of the disclosure and will not be repeated herein.

The above-described methods provided in the embodiments of the disclosure are described from the perspectives of the NRF network element, the first network element, the AI network element, and the TD, respectively. In order to realize each of the functions in the methods provided by the above embodiments of the disclosure, the NRF network element, the first network element, the AI network element, and the TD may include a hardware structure and/or a software module, and realize each of the above functions in the form of a hardware structure, a software module, or a combination of the hardware structure and the software module. A certain function of the above-described functions may be performed in the form of a hardware structure, a software module, or a combination of the hardware structure and the software module.

FIG. 9 is a block diagram of an AI service providing apparatus 1 provided by an embodiment of the disclosure.

The AI service providing apparatus 1 shown in FIG. 9 includes: a first processing module 11, a receiving module 12, a second processing module 13, and a sending module 14.

The first processing module 11 is configured to obtain an AI service provided by an AI network element and generate a candidate AI service list.

The receiving module 12 is configured to receive an AI service query request from a first network element.

The second processing module 13 is configured to generate an AI service list corresponding to the first network element based on the AI service query request and the candidate AI service list.

The sending module 14 is configured to feed back the AI service list to the first network element, in which the first network element selects the AI network element from the AI service list to provide the AI service.

As illustrated in FIG. 10, in some embodiments, the first processing module 11 includes: a first receiving unit 111 and a first processing unit 112.

The first receiving unit 111 is configured to receive a registration request from the AI network element, in which the registration request includes at least one AI service provided by the AI network element.

The first processing unit 112 is configured to generate the candidate AI service list based on the registration request.

In some embodiments, the registration request is an Nnrf_NFManagement_NFRegister request.

In some embodiments, the sending module 14 is further configured to send an Nnrf_NFManagement_NFRegister response to the AI network element.

In some embodiments, the second processing module 13 is configured to: obtain a network function and an AI service that the network function should support in the AI service query request, and generate the AI service list by performing filtering and matching on the candidate AI service list based on the network function and the AI service that the network function should support in the AI service query request.

In some embodiments, the AI service query request is received via an HTTP GET message, and the AI service list is sent to the first network element via an HTTP RESPONSE message.

With respect to the AI service providing apparatus 1 in the above embodiment, the specific manner in which each module performs an operation has been described in detail in the method embodiments, and will not be described in detail herein. The AI service providing apparatus 1 provided in the above-described embodiment of the disclosure achieves the same or similar beneficial effects as the AI service providing method provided in some of the above-described embodiments, and will not be described in detail herein.

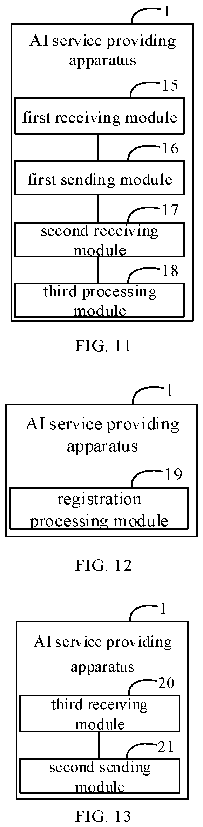

FIG. 11 is a block diagram of another AI service providing apparatus 1 provided by an embodiment of the disclosure.

The AI service providing apparatus 1 shown in FIG. 11 includes: a first receiving module 15, a first sending module 16, a second receiving module 17, and a third processing module 18.

The first receiving module 15 is configured to receive an AI service request from a terminal device, in which the AI service request includes required AI service information.

The first sending module 16 is configured to send an AI service query request to an NRF network element.

The second receiving module 17 is configured to receive an AI service list fed back by the NRF network element.

The third processing module 18 is configured to select an AI service that matches the AI service information from the AI service list, determine at least one AI network element corresponding to the AI service, and send a policy request to the AI network element.

In some embodiments, the AI service query request is sent to the NRF network element via an HTTP GET message, and the AI service list fed back by the NRF network element is received via an HTTP RESPONSE message.

In some embodiments, the first receiving module 15 is further configured to: receive policy information fed back by the AI network element, in which the policy information is generated by the corresponding AI service.

The first sending module 16 is configured to send the policy information to the TD.

In some embodiments, the AI service information of the TD is sent to the AI network element via an HTTP POST message, and the policy information fed back by the AI network element is received via an HTTP RESPONSE message.

With respect to the AI service providing apparatus 1 in the above embodiment, the specific manner in which each module performs an operation has been described in detail in the method embodiments, and will not be described in detail herein. The AI service providing apparatus 1 provided in the above embodiment of the disclosure achieves the same or similar beneficial effects as the AI service providing method provided in some of the above embodiments, which will not be described in detail herein.

FIG. 12 is a structural diagram of another AI service providing apparatus 1 provided by an embodiment of the disclosure.

The AI service providing apparatus 1 shown in FIG. 12 includes: a registration processing module 19.

The registration processing module 19 is configured to send a registration request to an NRF network element, in which the registration request includes at least one AI service provided by the AI network element.

In some embodiments, the registration request is an Nnrf_NFManagement_NFRegister request.

In some embodiments, the registration processing module 19 is configured to receive an Nnrf_NFManagement_NFRegister response from the NRF network element.

As illustrated in FIG. 13, in some embodiments, the AI service providing apparatus 1 includes: a third receiving module 20 and a second sending module 21. The third receiving module 20 is configured to: receive AI service information of a TD sent by a first network element.

The second sending module 21 is configured to determine policy information based on the AI service information of the TD and send the policy information to the first network element.

In some embodiments, the AI service information of the TD is received via an HTTP POST message, and the policy information is sent to the first network element via an HTTP RESPONSE message.

With respect to the AI service providing apparatus 1 in the above embodiment, the specific manner in which each module performs an operation has been described in detail in the method embodiments, and will not be described in detail herein. The AI service providing apparatus 1 provided in the above embodiment of the disclosure achieves the same or similar beneficial effects as the AI service providing method provided in some of the above embodiments, which will not be described in detail herein.

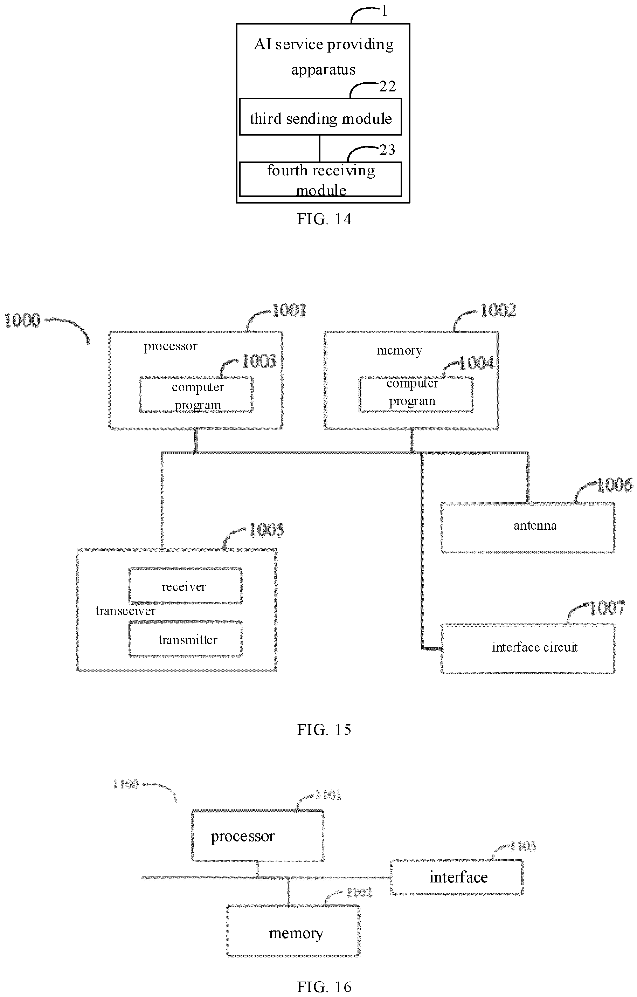

FIG. 14 is a structural diagram of another AI service providing apparatus 1 provided by an embodiment of the disclosure.

The AI service providing apparatus 1 shown in FIG. 14 includes: a third sending module 22 and a fourth receiving module 23.

The third sending module 22 is configured to send an AI service request to a first network element, in which the AI service request includes required AI service information.

The fourth receiving module 23 is configured to receive policy information fed back by the first network element, in which the policy information is generated by a corresponding AI service.

With respect to the AI service providing apparatus 1 in the above embodiment, the specific manner in which each module performs an operation has been described in detail in the method embodiments, and will not be described in detail herein. The AI service providing apparatus 1 provided in the above embodiment of the disclosure achieves the same or similar beneficial effects as the AI service providing method provided in some of the above embodiments, which will not be described in detail herein.

As illustrated in FIG. 15, FIG. 15 is a block diagram illustrating a communication apparatus 1000 according to an embodiment of the disclosure. The communication apparatus 1000 may be a terminal device, or a chip, a chip system or a processor that supports the terminal device to realize the above-described methods. The apparatus may be used to realize the methods described in the above method embodiments with reference to the descriptions of the above-described method embodiments.

The communication apparatus 1000 may include one or more processors 1001. The processor 1001 may be a general purpose processor or a dedicated processor, such as, a baseband processor or a central processor. The baseband processor is used for processing communication protocols and communication data. The central processor is used for controlling the communication apparatus (e.g., base station, baseband chip, terminal device, terminal device chip, central unit (CU) or distributed unit (DU)), executing computer programs, and processing data of the computer programs.

Optionally, the communication apparatus 1000 may include one or more memories 1002 on which computer programs 1004 may be stored. The memory 1002 executes the computer programs 1004 to cause the communication apparatus 1000 to perform the methods described in the above method embodiments. Optionally, data may also be stored in the memory 1002. The communication apparatus 1000 and the memory 1002 may be provided separately or may be integrated together.

Optionally, the communication apparatus 1000 may also include a transceiver 1005 and an antenna 1006. The transceiver 1005 may be referred to as transceiver unit, transceiver machine, or transceiver circuit, for realizing the transceiver function. The transceiver 1005 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1000 may also include one or more interface circuits 1007. The interface circuits 1007 are used to receive code instructions and transmit them to the processor 1001. The processor 1001 runs the code instructions to cause the communication apparatus 1000 to perform the method described in the method embodiments.

The communication apparatus 1000 may be a terminal device, and the transceiver 1005 is used to perform steps S81 and S82 in FIG. 8.

In an implementation, the processor 1001 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1001 may store a computer program 1003, which runs on the processor 1001 and may cause the communication apparatus 1000 to perform the methods described in the method embodiments above. The computer program 1003 may be solidified in the processor 1001, in which case the processor 1001 may be implemented by hardware.

In an implementation, the communication apparatus 1000 may include circuits. The circuits may implement the sending, receiving or communicating function in the preceding method embodiments. The processors and transceivers described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a terminal device, but the scope of the communication apparatus described in the disclosure is not limited thereto, and the structure of the communication apparatus may not be limited by FIG. 15. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the communication apparatus may be a chip or a chip system is described with reference to the schematic structure of the chip shown in FIG. 16.

As illustrated in FIG. 16, the chip 1100 includes a processor 1101 and an interface 1103. There may be one or more processors 1101 and a plurality of interfaces 1103.

In the case where the chip is used to implement the functions of the terminal device in the embodiments of the disclosure,
the interface 1103 is configured to receive code instructions and transmit them to the processor,
and the processor 1101 is configured to run the code instructions to execute the AI service providing methods as described in some embodiments.

Optionally, the chip 1100 further includes a memory 1102, used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Unless the context requires otherwise, throughout the specification and claims, the term "comprise" and its other forms, such as "comprises" and "comprising", are interpreted as open, inclusive, i.e., "includes, but is not limited to". In the description of the specification, the terms "some embodiments", "exemplary embodiments", etc. are intended to indicate that certain features, structures, materials or characteristics related to the embodiments or examples are included in at least one embodiment or example of the disclosure. The schematic representations of the above terms do not necessarily refer to the same embodiment or example. Furthermore, the features, structures, materials, or characteristics described above may be included in any one or more embodiments or examples in any suitable manner.

Those skilled in the art understand that first, second, and other various numerical numbers involved in the disclosure are only described for the convenience of differentiation, and are not used to limit the scope of the embodiments of the disclosure, and are not used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude. The term "A and/or B" includes the following three combinations: A only, B only, and a combination of A and B.

Those skilled in the art may realize that the units and algorithmic steps of the various examples described in combination with the embodiments disclosed herein are capable of being implemented by electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above descriptions are specific implementations of the disclosure, but the protection scope of the disclosure is not limited thereto. Any technician familiar with the technical field can easily think of changes or substitutions within the technical scope disclosed in the disclosure, which should be included in the protection scope of the disclosure. Therefore, the protection scope of the disclosure should be based on the protection scope of the claims.

## Claims

1. An artificial intelligence (AI) service providing method, applied to a network repository function (NRF) network element, comprising:
obtaining an AI service provided by an AI network element and generating a candidate AI service list;
receiving an AI service query request from a first network element;
generating an AI service list corresponding to the first network element based on the AI service query request and the candidate AI service list; and
feeding back the AI service list to the first network element, wherein the first network element selects the AI network element from the AI service list to provide the AI service.

2. The method of claim 1, wherein obtaining the AI service provided by the AI network element and generating the candidate AI service list, comprise:
receiving a registration request from the AI network element, wherein the registration request comprises at least one AI service provided by the AI network element; and
generating the candidate AI service list based on the registration request.

3. The method of claim 2, wherein the registration request is an Nnrf_NFManagement_NFRegister request.

4. The method of claim 2 or 3, wherein after receiving the registration request from the AI network element, the method further comprises:
sending an Nnrf_NFManagement_NFRegister response to the AI network element.

5. The method of claim 1, wherein generating the AI service list corresponding to the first network element based on the AI service query request and the candidate AI service list, comprises:
obtaining a network function and an AI service that the network function supports in the AI service query request; and
generating the AI service list by performing filtering and matching on the candidate AI service list based on the network function and the AI service that the network function supports in the AI service query request.

6. The method of any one of claims 1-5, wherein the AI service query request is received via an HTTP GET message, and the AI service list is sent to the first network element via an HTTP RESPONSE message.

7. An artificial intelligence (AI) service providing method, applied to a first network element, comprising:
receiving an AI service request from a terminal device, wherein the AI service request comprises required AI service information;
sending an AI service query request to a network repository function (NRF) network element;
receiving an AI service list fed back by the NRF network element; and
selecting an AI service that matches the AI service information from the AI service list, determining at least one AI network element corresponding to the AI service, and sending a policy request to the AI network element.

8. The method of claim 7, wherein the AI service query request is sent to the NRF network element via an HTTP GET message, and the AI service list fed back by the NRF network element is received via an HTTP RESPONSE message.

9. The method of claim 7 or 8, further comprising:
receiving policy information fed back by the AI network element, wherein the policy information is generated by the AI service; and
sending the policy information to the terminal device.

10. The method of claim 9, wherein the AI service information of the terminal device is sent to the AI network element via an HTTP POST message, and the policy information fed back by the AI network element is received via an HTTP RESPONSE message.

11. An artificial intelligence (AI) service providing method, applied to an AI network element, comprising:
sending a registration request to a network repository function (NRF) network element, wherein the registration request comprises at least one AI service provided by the AI network element.

12. The method of claim 11, wherein the registration request is an Nnrf_NFManagement_NFRegister request.

13. The method of claim 11 or 12, further comprising:
receiving an Nnrf_NFManagement_NFRegister response from the NRF network element.

14. The method of any one of claims 11-13, further comprising:
receiving AI service information of a terminal device sent by a first network element; and
determining policy information based on the AI service information of the terminal device and sending the policy information to the first network element.

15. The method of claim 14, wherein the AI service information of the terminal device is received via an HTTP POST message, and the policy information is sent to the first network element via an HTTP RESPONSE message.

16. An artificial intelligence (AI) service providing method, applied to a terminal device, comprising:
sending an AI service request to a first network element, wherein the AI service request comprises required AI service information; and
receiving policy information fed back by the first network element, wherein the policy information is generated by a corresponding AI service.

17. An artificial intelligence (AI) service providing apparatus, applied to a network repository function (NRF) network element, comprising:
a first processing module, configured to obtain an AI service provided by an AI network element and generate a candidate AI service list;
a receiving module, configured to receive an AI service query request from a first network element;
a second processing module, configured to generate an AI service list corresponding to the first network element based on the AI service query request and the candidate AI service list; and
a sending module, configured to feedback the AI service list to the first network element, wherein the first network element selects the AI network element from the AI service list to provide the AI service.

18. An artificial intelligence (AI) service providing apparatus, applied to a first network element, comprising:
a first receiving module, configured to receive an AI service request from a terminal device, wherein the AI service request comprises required AI service information;
a first sending module, configured to send an AI service query request to a network repository function (NRF) network element;
a second receiving module, configured to receive an AI service list fed back by the NRF network element; and
a third processing module, configured to select an AI service that matches the AI service information from the AI service list, determine at least one AI network element corresponding to the AI service, and send a policy request to the AI network element.

19. An artificial intelligence (AI) service providing apparatus, applied to an AI network element, comprising:
a registration processing module, configured to send a registration request to a network repository function (NRF) network element, wherein the registration request comprises at least one AI service provided by the AI network element.

20. An artificial intelligence (AI) service providing apparatus, applied to a terminal device, comprising:
a third sending module, configured to send an AI service request to a first network element, wherein the AI service request comprises required AI service information; and
a fourth receiving module, configured to receive policy information fed back by the first network element, wherein the policy information is generated by a corresponding AI service.

21. A communication apparatus comprising: a processor, and a memory having computer programs stored thereon, wherein when the computer programs are executed by the processor, the communication apparatus is caused to perform the method of any one of claims 1-6, the method of any one of claims 7-10, the method of any one of claims 11-15, or the method of claim 16.

22. A communication apparatus, comprising: a processor and an interface circuit;
wherein the interface circuit is configured to receive code instructions and transmit the code instructions to the processor; and
the processor is configured to run the code instructions to perform the method of any one of claims 1-6, the method of any one of claims 7-10, the method of any one of claims 11-15, or the method of claim 16.

23. A computer-readable storage medium having instructions stored thereon, wherein when the instructions are executed, the method of any one of claims 1-6, the method of any one of claims 7-10, the method of any one of claims 11-15, or the method of claim 16 is implemented.
